(19) Europäisches Patentamt
European Patent Office
Office européen des brevets

(11) EP 3 165 943 B1

(12) **EUROPÄISCHE PATENTSCHRIFT**

(45) Veröffentlichungstag und Bekanntmachung des Hinweises auf die Patenterteilung:
**26.12.2018 Patentblatt 2018/52**

(51) Int Cl.:
**G01S 11/12** *(2006.01)* **G01S 17/74** *(2006.01)*
**H04B 10/11** *(2013.01)* **B65G 43/00** *(2006.01)*

(21) Anmeldenummer: **16194993.8**

(22) Anmeldetag: **21.10.2016**

(54) **FÖRDEREINRICHTUNG**

TRANSPORT DEVICE

CONVOYEUR-TRANSPORTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.11.2015 DE 102015221836**

(43) Veröffentlichungstag der Anmeldung:
**10.05.2017 Patentblatt 2017/19**

(73) Patentinhaber: **Pepperl + Fuchs GmbH**
**68307 Mannheim (DE)**

(72) Erfinder:
• **BRANDT, Sönke**
**10825 Berlin (DE)**

• **WETTENGEL, Ilja**
**12559 Berlin (DE)**
• **VOIGT, Michael**
**10585 Berlin (DE)**
• **STEINHÄUSER, Frank**
**12489 Berlin (DE)**

(74) Vertreter: **Fischer, Uwe**
**Patentanwalt**
**Moritzstraße 22**
**13597 Berlin (DE)**

(56) Entgegenhaltungen:
**KR-A- 20120 113 311     US-A1- 2005 058 081**
**US-A1- 2013 094 927**

EP 3 165 943 B1

**Beschreibung**

Die Erfindung bezieht sich auf Fördereinrichtungen und Verfahren zu deren Betrieb.

Die deutsche Patentschrift DE 44 35 056 B4 beschreibt - im Zusammenhang mit einem Verfahren und einer Vorrichtung zum Lagern von Waren - eine Fördereinrichtung, die verfahrbare Transporteinrichtungen in Form von sogenannten Förderern aufweist.

US20130094927 zeigt eine Fördereinrichtung mit einem optischen Freistrahlkommunikationssystem.

Der Erfindung liegt die Aufgabe zugrunde, eine Fördereinrichtung anzugeben, die einen besonders sicheren Betrieb ermöglicht.

Diese Aufgabe wird erfindungsgemäß durch eine Fördereinrichtung mit den Merkmalen gemäß Patentanspruch 1 gelöst. Vorteilhafte Ausgestaltungen der erfindungsgemäßen Fördereinrichtung sind in Unteransprüchen angegeben.

Danach ist erfindungsgemäß vorgesehen, dass die Fördereinrichtung ein optisches Freistrahlkommunikationssystem aufweist mit mindestens zwei Sende- und Empfangseinheiten, die jeweils einen Sender, einen Empfänger und eine Steuereinheit umfassen und von denen eine an der verfahrbaren Transporteinrichtung und die andere an einem anderen Abschnitt der Fördereinrichtung befestigt ist, wobei die mindestens zwei Sende- und Empfangseinheiten in einer optischen Freistrahlverbindung stehen und eine Übermittlung von Datenpaketen ermöglichen, wobei zumindest eine der, vorzugsweise beide der zumindest zwei, Sende- und Empfangseinheiten geeignet ist, aus über die optische Freistrahlverbindung empfangenen optischen Empfangssignalen ein Empfangstaktsignal zu erzeugen, die Zeitpunkte von ansteigenden und/oder abfallenden Flankenwechseln des Empfangstaktsignals über eine Vielzahl an Taktperioden zu erfassen, unter Heranziehung der Zeitpunkte in der Vergangenheit den Zeitpunkt des jeweils nächsten Flankenwechsels unter Bildung eines geschätzten Flankenwechselzeitpunkts zu schätzen und anhand des geschätzten Flankenwechselzeitpunkts und des tatsächlichen Flankenwechselzeitpunkts einen eine Abstandsänderung zwischen den Sende- und Empfangseinheiten angebenden Abstandsänderungswert zu bilden.

Ein wesentlicher Vorteil der erfindungsgemäßen Fördereinrichtung ist darin zu sehen, dass bei dieser eine Abstandsänderung zwischen den Sende- und Empfangseinheiten und damit eine Abstandsänderung zwischen der verfahrbaren Transporteinrichtung und dem anderen Abschnitt der Fördereinrichtung in einfacher und zuverlässiger Weise erkannt werden kann, und zwar allein anhand der über das optische Freistrahlkommunikationssystem übertragenen Flankenwechsel. Es ist somit beispielsweise möglich, auf andere Weise erhaltene Abstandsmesswerte, insbesondere absolute Abstandsmesswerte, zeitnah zu korrigieren. Dies ist von besonderer Bedeutung, wenn ein Bereich zwischen der verfahrbaren Transporteinrichtung und dem anderen Abschnitt der Fördereinrichtung freigegeben werden soll, zum Beispiel für andere Fahrzeuge oder passierende Personen.

Zur Bestimmung der Abstandsänderung weist die Sende- und Empfangseinheit, insbesondere deren Steuereinheit, vorzugsweise ein Abstandsänderungserkennungsmodul auf.

Als vorteilhaft wird es angesehen, wenn die Sende- und Empfangseinheit, insbesondere deren Abstandsänderungserkennungsmodul, die zeitliche Differenz zwischen dem geschätzten Flankenwechselzeitpunkt und dem tatsächlichen Flankenwechselzeitpunkt ermittelt und den Abstandsänderungswert unter Heranziehung der zeitlichen Differenz bildet.

Besonders einfach und damit vorteilhaft lässt sich die zeitliche Differenz ermitteln, wenn die Sende- und Empfangseinheit, insbesondere deren Abstandsänderungserkennungsmodul, einen Zählerbaustein aufweist, der jeweils bei ansteigender und/oder abfallender Flanke des aktuell erzeugten Empfangstaktsignals einen Zeitstempel, insbesondere einen Zählerstand, erzeugt.

Die Sende- und Empfangseinheit, insbesondere deren Abstandsänderungserkennungsmodul, ermittelt bevorzugt die zeitliche Differenz zwischen dem geschätzten Flankenwechselzeitpunkt und dem tatsächlichen Flankenwechselzeitpunkt anhand der Differenz zwischen dem geschätzten Zählerstand beim geschätzten Flankenwechselzeitpunkt und dem tatsächlichen Zählerstand bei dem tatsächlichen Flankenwechselzeitpunkt.

Auch ist es vorteilhaft, wenn die Sende- und Empfangseinheit derart ausgestaltet ist, dass sie zusätzlich zu dem Abstandsänderungswert einen den Abstand zwischen den Sende- und Empfangseinheiten angebenden, absoluten Abstandsmesswert bestimmt.

Bei der letztgenannten Variante ist es von Vorteil, wenn die Sende- und Empfangseinheit derart ausgestaltet ist, dass sie den absoluten Abstandsmesswert und den auf diesen zeitlich bezogenen Abstandsänderungswert (vorzeichenrichtig) addiert und den Summenwert als tatsächlichen bzw. aktualisierten Abstandsmesswert weiterverwendet.

Besonders vorteilhaft ist es, wenn die Steuereinheit der Sende- und Empfangseinheit, nachfolgend erste Sende- und Empfangseinheit genannt, derart ausgestaltet ist, dass sie den absoluten Abstandsmesswert unter Heranziehung einer Information oder mehrerer Informationen ermittelt, die über die optische Freistrahlverbindung von der jeweils anderen Sende- und Empfangseinheit, nachfolgend zweite Sende- und Empfangseinheit genannt, empfangen werden.

Vorzugsweise ist die Steuereinheit der zweiten Sende- und Empfangseinheit derart ausgestaltet, dass sie mittels ihres Senders die Information, die Informationen, Teile der Information oder Teile der Informationen in ungenutzten Paketabschnitten von Nutzdatenpaketen überträgt.

Alternativ kann die Steuereinheit der zweiten Sende- und Empfangseinheit derart ausgestaltet sein, dass sie mittels ihres Senders die Information, die Informationen, Teile der Information oder Teile der Informationen in separaten Informationspaketen überträgt, die zwischen Nutzdatenpaketen, insbesondere unmittelbar vor oder hinter Nutzdatenpaketen, gesendet werden.

Bezüglich der Ausgestaltung der Steuereinheit der zweiten Sende- und Empfangseinheit wird es als vorteilhaft angesehen, wenn diese ein Kommunikationsmodul zur Übermittlung der Nutzdatenpakete und ein Abstandsbestimmungsmodul aufweist.

Das Abstandsbestimmungsmodul der zweiten Sende- und Empfangseinheit ist bevorzugt derart ausgestaltet, dass es die Zeitspanne erfasst oder ermittelt, die zwischen dem Empfang eines von der ersten Sende- und Empfangseinheit gesendeten Datenpakets und dem darauf folgenden Wegsenden eines Datenpakets zur ersten Sende- und Empfangseinheit vergangen ist oder vergehen wird, und die erfasste Zeitspanne als die Information oder eine der Informationen zu dem Kommunikationsmodul seiner Sende- und Empfangseinheit übermittelt.

Das Kommunikationsmodul der zweiten Sende- und Empfangseinheit ist bevorzugt derart ausgestaltet, dass es die erfasste Zeitspanne als die Information oder eine der Informationen in ungenutzten Paketabschnitten der Nutzdatenpakete und/oder in separaten Informationspaketen zur ersten Sende- und Empfangseinheit übermittelt.

Die Steuereinheit der ersten Sende- und Empfangseinheit weist bevorzugt ein Abstandsbestimmungsmodul auf, das derart ausgestaltet ist, dass es die Gesamtzeitspanne erfasst, die zwischen dem Wegsenden eines eigenen Datenpakets zur zweiten Sende- und Empfangseinheit und dem Empfang eines von der zweiten Sende- und Empfangseinheit nachfolgend empfangenen Datenpakets (z.B. Antwortdatenpakets) vergeht, und den Abstand anhand der selbst erfassten Gesamtzeitspanne und der von der zweiten Sende- und Empfangseinheit erfassten und als Information empfangenen Zeitspanne ermittelt.

Besonders bevorzugt ist das Abstandsbestimmungsmodul der Steuereinheit der ersten Sende- und Empfangseinheit derart ausgestaltet, dass es den Abstand bzw. den oben erwähnten absoluten Abstandsmesswert ermittelt gemäß:

$$S = v \cdot \frac{dT - dt}{2}$$

wobei dT die selbst erfasste Gesamtzeitspanne bezeichnet, wobei dt die von der zweiten Sende- und Empfangseinheit als Information empfangene Zeitspanne bezeichnet, wobei v die Ausbreitungsgeschwindigkeit der optischen Strahlung bezeichnet und wobei S den Abstand bzw. den oben genannten absoluten Abstandsmesswert bezeichnet.

Die mindestens zwei Sende- und Empfangseinheiten, insbesondere deren Abstandsbestimmungsmodule, sind vorzugsweise identisch oder zumindest jeweils derart ausgestaltet, dass sie sowohl als die eine als auch als die andere Sende- und Empfangseinheit bzw. sowohl als die erste als auch als die zweite Sende- und Empfangseinheit arbeiten können und beide Sende- und Empfangseinheiten jeweils für sich anhand einer empfangenen Information oder mehrerer empfangener Informationen der jeweils anderen Sende- und Empfangseinheit den räumlichen Abstand zwischen den beiden Sende- und Empfangseinheiten ermitteln können.

Die Steuereinheit weist bevorzugt eine Rechnereinrichtung und einen Speicher auf, in dem Softwaremodule gespeichert sind, von denen eines bei Ausführung durch die Rechnereinrichtung das Abstandsbestimmungsmodul, eines bei Ausführung durch die Steuereinheit das Kommunikationsmodul und/oder eines bei Ausführung durch die Rechnereinrichtung das Abstandsänderungserkennungsmodul bildet.

Auch ist es vorteilhaft, wenn die Steuereinheiten der zwei Sende- und Empfangseinheiten jeweils derart ausgestaltet sind, dass sie ein Empfangssignal, insbesondere dessen Datenpakete oder zumindest eine vorgegebene Art von Datenpaketen, auf das Vorhandensein einer Gerätekennung, die die jeweils andere Sende- und Empfangseinheit identifiziert, überprüfen und das Empfangssignal, insbesondere das jeweilige Datenpaket, komplett oder in Teilen verwerfen, wenn in dem Empfangssignal bzw. dem jeweiligen Datenpaket keine die jeweils andere Sende- und Empfangseinheit identifizierende Gerätekennung enthalten ist. Ein Vorteil dieser Ausgestaltung besteht darin, dass bei dieser eine besonders sichere und fehlerfreie Übertragung von Daten bzw. Informationen möglich ist, weil nur Datenpakete mit korrekter Gerätekennung verwertet werden und andere verworfen werden können. Dies ist von besonderer Bedeutung, wenn - wie oben erwähnt - beispielsweise im Rahmen der Datenpakete Abstandsinformationen übertragen oder aus oder mit den Datenpaketen Abstandsinformationen, beispielsweise durch Taktflankenauswertung, gewonnen werden und anhand dieser Abstandsinformationen ein Bereich zwischen der verfahrbaren Transporteinrichtung und dem anderen Abschnitt der Fördereinrichtung freigegeben werden soll, zum Beispiel für andere Fahrzeuge oder passierende Personen.

Im Zusammenhang mit der Gerätekennung wird es als vorteilhaft angesehen, wenn die Steuereinheiten beider Sende- und Empfangseinheiten jeweils derart ausgestaltet sind, dass sie den räumlichen Abstand zwischen den beiden Sende- und Empfangseinheiten unter Heranziehung einer die Abstandsermittlung ermöglichenden oder diese unterstützenden Information oder mehrerer solcher Informationen ermitteln, die von der jeweils anderen Sende- und Empfangseinheit empfangen werden, und die Steuereinheiten außerdem jeweils derart ausgestaltet sind, dass sie ein empfangenes Datenpaket, das eine die Abstandsermittlung ermöglichende oder diese unterstützende Information aufweist, auf das Vorhandensein der Gerätekennung, die die jeweils andere Sende- und Empfangseinheit identifiziert, überprüfen und die in dem jeweiligen Datenpaket enthaltene Information zur Bestimmung des räumlichen Abstands ausschließlich dann heranziehen, wenn in dem jeweiligen Datenpaket die Gerätekennung enthalten ist, und andernfalls das Empfangssignal bei der Abstandsbestimmung unberücksichtigt lassen.

Vorzugsweise weisen die Steuereinheiten beider Sende- und Empfangseinheiten jeweils ein Abstandsbestimmungsmodul auf, das derart ausgestaltet ist, dass es den räumlichen Abstand zwischen den beiden Sende- und Empfangseinheiten unter Heranziehung einer Information oder mehrerer Informationen ermittelt, die von der jeweils anderen Sende- und Empfangseinheit empfangen werden.

Darüber hinaus weisen die Steuereinheiten beider Sende- und Empfangseinheiten vorzugsweise jeweils ein Verifizierungsmodul auf, das derart ausgestaltet ist, dass es ein empfangenes Datenpaket, das eine die Abstandsermittlung ermöglichende oder diese unterstützende Information aufweist, auf das Vorhandensein der Gerätekennung, die die jeweils andere Sende- und Empfangseinheit identifiziert, überprüft und die in dem Datenpaket enthaltene Information zur Bestimmung des räumlichen Abstandes ausschließlich dann für eine Auswertung durch das Abstandsbestimmungsmodul freigibt, wenn in dem Empfangssignal die die jeweils andere Sende- und Empfangseinheit identifizierende Gerätekennung enthalten ist, und andernfalls die Verwertung der Information blockiert.

Ein Prüfsummenkontrollmodul des Verifizierungsmoduls ist bevorzugt derart ausgestaltet, dass es bei einem zu prüfenden Datenpaket eine vorgegebene Prüfsummenkontrolle vornimmt und eine in dem Datenpaket enthaltene Information zur Bestimmung des räumlichen Abstandes ausschließlich dann für eine Auswertung durch das Abstandsbestimmungsmodul freigibt, wenn die Prüfsummenkontrolle die Fehlerfreiheit der empfangenen Gerätekennung bestätigt oder sich in der Gerätekennung enthaltene Fehler anhand der jeweiligen Prüfsumme korrigieren lassen, und andernfalls die Verwertung der Information blockiert.

Alternativ oder zusätzlich kann das Prüfsummenkontrollmodul des Verifizierungsmoduls auch derart ausgestaltet sein, dass es eine in einem Datenpaket enthaltene Information zur Bestimmung des räumlichen Abstands ausschließlich dann für eine Auswertung durch das Abstandsbestimmungsmodul freigibt, wenn die Prüfsummenkontrolle die Fehlerfreiheit der Information zur Bestimmung des räumlichen Abstands bestätigt oder sich festgestellte Fehler korrigieren lassen, und andernfalls die Verwertung der Information blockiert.

Die Steuereinheiten, insbesondere deren Prüfsummenkontrollmodule, sind vorzugsweise derart ausgestaltet, dass sie bei zu prüfenden Datenpaketen eine zyklische Redundanzprüfung vornehmen.

Auch ist es vorteilhaft, wenn die Steuereinheiten, insbesondere deren Abstandsbestimmungsmodule, derart ausgestaltet sind, dass sie ermittelte Abstandswerte, die den räumlichen Abstand zwischen den beiden Sende- und Empfangseinheiten angeben, untereinander austauschen und vergleichen und im Falle, dass die Abweichung zwischen den selbst ermittelten, eigenen Abstandswerten und den von der jeweils anderen Sende- und Empfangseinheit empfangenen Abstandswerten eine vorgegebene maximale Differenz erreicht oder überschreitet, ein Fehlersignal erzeugen. Vor, während oder nach der Übertragung der Abstandswerte wird für diese vorzugsweise jeweils eine Prüfsumme gebildet, die zusammen mit den Abstandswerten oder getrennt von diesen zu der jeweils anderen Sende- und Empfangseinheit übermittelt wird, damit letztgenannte eine Kontrolle der Abstandswerte auf Fehlerfreiheit und ggf. eine Fehlerkorrektur vornehmen kann.

Darüber hinaus wird es als vorteilhaft angesehen, wenn die Sende- und Empfangseinheiten jeweils einen Datenpuffer umfassen und die Steuereinheiten jeweils derart ausgestaltet sind, dass sie für jedes Datenpaket oder zumindest für eine vorgegebene Art an Datenpaketen vor dem Versenden jeweils eine Pufferzeitspanne ermitteln, für die das jeweilige Datenpaket vor dem Versenden zu der jeweils anderen Sende- und Empfangseinheit zwischengespeichert werden soll, das Datenpaket für die jeweilige Pufferzeitspanne in dem Datenpuffer speichern und erst anschließend zu der jeweils anderen Sende- und Empfangseinheit übermitteln. Die Pufferzeitspannen werden bevorzugt jeweils derart ermittelt, dass diese einer vorgegebenen maximalen Pufferzeitspanne abzüglich der von der Steuereinheit prognostizierten Laufzeit des jeweiligen Datenpakets zu der jeweils anderen Sende- und Empfangseinheit entsprechen. Durch die Pufferung lässt sich erreichen, dass alle Datenpakete unabhängig oder zumindest weitgehend unabhängig von dem jeweiligen räumlichen Abstand zwischen den Sende- und Empfangseinheiten stets in demselben zeitlichen Abstand eintreffen und der "Pakettakt" bzw. die Paketrate abstandsunabhängig oder zumindest weitgehend abstandsunabhängig ist. Da der "Pakettakt" bzw. die Paketrate feststeht oder quasi feststeht, lässt sich die Verarbeitung der Datenpakete vereinfachen, weil das Eintreffen des jeweils nächsten Datenpakets erwartet werden kann. Auch lassen sich beispielsweise fremde oder verfälschte Datenpakete, die einen anderen Takt aufweisen bzw. zur Unzeit eintreffen, erkennen und verwerfen.

Mit Blick auf die Pufferung wird es als vorteilhaft angesehen, wenn die Steuereinheiten beider Sende- und Empfangseinheiten jeweils derart ausgestaltet sind, dass sie die räumliche Entfernung zwischen den beiden Sende- und Empfangseinheiten unter Bildung eines Abstandswerts ermitteln und unter Berücksichtigung dieses Abstandswerts die Laufzeit des jeweiligen Datenpakets prognostizieren.

Die Steuereinheiten beider Sende- und Empfangseinheiten weisen vorzugsweise jeweils ein Verzögerungsmodul auf, das für die zu sendenden Datenpakete oder zumindest für eine vorgegebene Art an Datenpaketen, insbesondere Nutzdatenpakete oder separate Informationspakete, jeweils eine Pufferzeitspanne ermittelt, für die das jeweilige Datenpaket vor dem Versenden zu der jeweils anderen Sende- und Empfangseinheit zwischengespeichert werden soll.

Bevorzugt ermittelt das Verzögerungsmodul die Pufferzeitspannen für jedes Datenpaket jeweils gemäß

$$PZS = PZSmax - tL,$$

wobei PZS die zu ermittelnde Pufferzeitspanne, PZSmax die vorgegebene maximale Pufferzeitspanne und tL die prognostizierte Laufzeit des jeweiligen Datenpakets zu der jeweils anderen Sende- und Empfangseinheit bezeichnet.

Auch ist es vorteilhaft, wenn das Verzögerungsmodul die prognostizierte Laufzeit anhand eines von einem Abstandsbestimmungsmodul ermittelten Abstands zwischen den beiden Sende- und Empfangseinheiten bestimmt gemäß:

$$tL = S / v$$

wobei v die Ausbreitungsgeschwindigkeit der optischen Strahlung, tL die prognostizierte Laufzeit tL und S den Abstand bezeichnet.

Vorzugsweise ist das Verzögerungsmodul derart ausgestaltet, dass es die vorgegebene maximale Pufferzeitspanne ermittelt in Abhängigkeit von einer vorgegebenen maximal zulässigen Entfernung Smax zwischen den Sende- und Empfangseinheiten gemäß:

$$PZSmax = Smax/v$$

wobei Smax die maximal zulässige Entfernung, PZSmax die vorgegebene maximale Pufferzeitspanne und v die Ausbreitungsgeschwindigkeit der optischen Strahlung bezeichnet.

Die Steuereinheiten beider Sende- und Empfangseinheiten weisen bevorzugt jeweils einen Verzögerungsspeicher auf, dessen Speichergröße mindestens so groß wie das Produkt aus der Datenrate auf der optischen Freistrahlkommunikationsverbindung und der maximalen Pufferzeitspanne ist. Bevorzugt gilt also:

$$SG \geq PSMmax * fd$$

wobei SG die Speichergröße des Verzögerungsspeichers, PZSmax die maximale Pufferzeitspanne und fd die Datenrate auf der optischen Freistrahlkommunikationsverbindung bezeichnet.

Die Fördereinrichtung bildet bevorzugt eine Hebeeinrichtung, einen Aufzug oder einen Kran.

Die verfahrbare Transporteinrichtung wird bevorzugt durch einen Verfahrwagen eines Lagers, insbesondere Regallagers, ein Hubelement einer Hebeeinrichtung oder eine Kabine oder ein verfahrbares Hebeelement eines Aufzugs gebildet.

Bei der verfahrbaren Transporteinrichtung handelt es sich bevorzugt um eine linear verfahrbare Transporteinrichtung.

Die Erfindung bezieht sich außerdem auf ein Verfahren zum Betreiben einer Fördereinrichtung.

Bezüglich eines solchen Verfahrens ist erfindungsgemäß vorgesehen, dass der räumliche Abstand zwischen einer verfahrbaren Transporteinrichtung der Fördereinrichtung und einem anderen, insbesondere ortsfesten, Abschnitt der Fördereinrichtung ermittelt wird, wobei die mindestens zwei Sende- und Empfangseinheiten in einer optischen Freistrahlverbindung betrieben werden und eine Übermittlung von Datenpaketen erfolgt, und wobei zumindest eine der, vorzugsweise beide der zumindest zwei, Sende- und Empfangseinheiten aus den über die optische Freistrahlverbindung empfangenen optischen Empfangssignalen ein Empfangstaktsignal erzeugt, die Zeitpunkte von ansteigenden und/oder abfallenden Flankenwechseln des Empfangstaktsignals über eine Vielzahl an Taktperioden erfasst, unter Heranziehung der Zeitpunkte in der Vergangenheit den Zeitpunkt des jeweils nächsten Flankenwechsels unter Bildung eines geschätzten Flankenwechselzeitpunkts schätzt und anhand des geschätzten Flankenwechselzeitpunkts und des tatsächlichen Flankenwechselzeitpunkts einen eine Abstandsänderung zwischen den Sende- und Empfangseinheiten angebenden Abstandsänderungswert bildet.

Bezüglich der Vorteile des Verfahrens sei auf die obigen Erläuterungen im Zusammenhang mit der erfindungsgemäßen Fördereinrichtung verwiesen, da die Vorteile der erfindungsgemäßen Fördereinrichtung denen des erfindungsgemäßen Verfahrens entsprechen.

Vorteilhaft ist es, wenn zusätzlich zu dem Abstandsänderungswert ein den Abstand zwischen den Sende- und Empfangseinheiten angebender, absoluter Abstandsmesswert bestimmt wird.

Bei der letztgenannten Variante kann in vorteilhafter Weise der absolute Abstandsmesswert und der auf diesen zeitlich bezogene Abstandsänderungswert (vorzeichenrichtig) addiert und der Summenwert als tatsächlichen bzw. aktualisierten Abstandsmesswert weiterverwendet werden.

Vorzugsweise wird der absolute Abstandsmesswert ermittelt gemäß:

$$S = v \cdot \frac{dT - dt}{2}$$

wobei dT eine von der eigenen Sende- und Empfangseinheit selbst erfasste Gesamtzeitspanne bezeichnet, dt eine von der jeweils anderen Sende- und Empfangseinheit als Information empfangene Zeitspanne bezeichnet, v die Ausbreitungsgeschwindigkeit der optischen Strahlung bezeichnet und S den Abstand bzw. den absoluten Abstandsmesswert bezeichnet.

Die Erfindung wird nachfolgend anhand von Ausführungsbeispielen näher erläutert, dabei zeigen beispielhaft:

Figur 1        in einer vereinfachten schematischen Darstellung ein Ausführungsbeispiel für eine erfindungsgemäße Fördereinrichtung,

Figur 2        ein Ausführungsbeispiel für eine Steuer-einrichtung für Sende- und Empfangsein-heiten der Fördereinrichtung gemäß Fi-gur 1,

Figuren 3-5   beispielhaft die Übermittlung von Datenpaketen zwischen den Sende- und Emp-fangseinheiten der Fördereinrichtung ge-mäß Figur 1 im zeitlichen Verlauf,

Figur 6        ein Ausführungsbeispiel für eine Ab-standsbestimmung anhand von Informa-tionen, die zwischen den Sende- und Empfangseinheiten der Fördereinrichtung gemäß Figur 1 übertragen werden, und

Figuren 7-8   beispielhaft die Bestimmung einer Abstandsänderung durch Schätzung von Flankenwechselzeitpunkten und Ver-gleich der geschätzten Flankenwechsel-zeitpunkte mit den tatsächlichen Flan-kenwechselzeitpunkten.

In den Figuren werden für identische oder ver-gleichbare Komponenten dieselben Bezugszeichen ver-wendet.

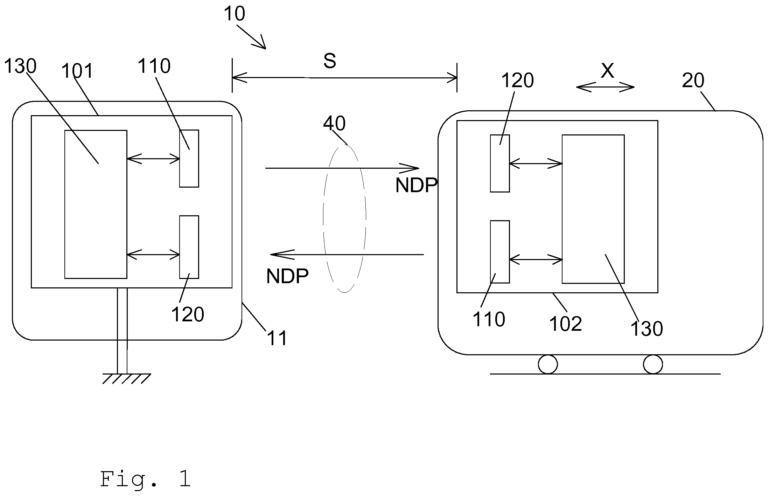

Die Figur 1 zeigt in einer vereinfachten schematischen Darstellung ein Ausführungsbeispiel für eine erfindungsgemäße Fördereinrichtung 10, bei der es sich beispielsweise um eine Hebeeinrichtung, einen Aufzug, einen Kran oder dergleichen handeln kann. Bei dem Ausführungsbeispiel gemäß Figur 1 bildet die Förderein-tung 10 einen Bestandteil eines automatisiert betriebenen Regallagers und umfasst unter anderem eine verfahrbare Transporteinrichtung 20, beispielsweise in Form eines linear entlang der Pfeilrichtung X verfahrbaren Verfahrwagens.

Die Fördereinrichtung 10 weist ein optisches Freistrahlkommunikationssystem 30 auf, das eine optische Freistrahlkommunikationsverbindung 40 zwischen der verfahrbaren Transporteinrichtung 20 und an einem anderen Abschnitt 11, beispielsweise ortsfesten Ab-schnitt oder einem anderen Verfahrwagen, der Fördereinrichtung 10 ermöglicht.

Das Freistrahlkommunikationssystem 30 umfasst eine an der verfahrbaren Transporteinrichtung 20 angebrachte erste Sende- und Empfangseinheit 101 und eine an dem anderen Abschnitt 11 der Fördereinrichtung 10 angebrachte zweite Sende- und Empfangseinheit 102. Die beiden Sende- und Empfangseinheiten 101 und 102 sind vorzugsweise baugleich und können demgemäß in identischer Weise betrieben werden. Die im Folgenden beispielhaft für die erste Sende- und Empfangseinheit 101 erläuterte Betriebsweise kann demgemäß in entsprechender Weise von der zweiten Sende- und Empfangseinheiten 102 ausgeführt werden, und umgekehrt.

Die beiden Sende- und Empfangseinheiten 101 und 102 umfassen jeweils einen Sender 110, einen Empfänger 120 und eine Steuereinheit 130 und stehen in der optischen Freistrahlkommunikationsverbindung 40 zum Zwecke einer Übertragung von Nutzdatenpaketen NDP.

Die Nutzdatenpakete NDP werden vorzugsweise in einem vorgegebenen optischen Übertragungskanal übermittelt. Als vorteilhaft wird es angesehen, wenn die Datenübertragungskapazität des Übertragungskanals größer bemessen ist als die zur Übertragung der Nutz-datenpakete NDP erforderliche Mindestdatenübertra-gungskapazität, so dass der Übertragungskanal einen freien Kanalbereich zur Verfügung stellt. Im Falle einer solchen Auslegung der optische Freistrahlkommunikationsverbindung 40 ist es beispielsweise möglich, zusätzlich Informationen zu übertragen, die eine Bestimmung des Abstandes S bzw. der räumlichen Entfernung zwischen den beiden Sende- und Empfangseinheiten 101 und 102 ermöglichen.

Der Abstand S kann zur Steuerung der Fördereinrichtung 10 herangezogen werden, beispielsweise um einen Bereich zwischen der verfahrbare Transporteinrichtung 20 und dem anderen Abschnitt 11 der Fördereinrichtung 10 freizugeben, beispielsweise für andere Fahrzeuge oder passierender Personen. Es ist aus diesem Grunde wichtig, dass der Abstand S möglichst genau ermittelt und möglichst fehlerarm übertragen wird; denn eine fehlerhafte Abstandsangabe könnte einen Unfall hervorrufen.

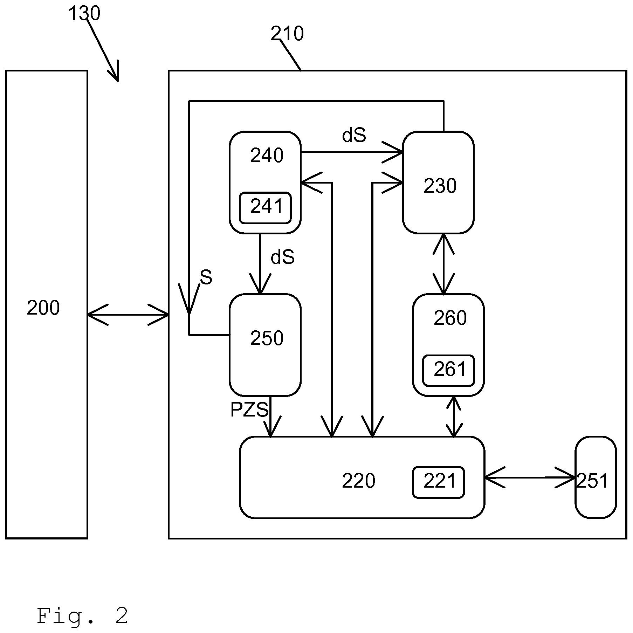

Die Figur 2 zeigt ein Ausführungsbeispiel für eine Steuereinheit 130, die in den beiden Sende- und Empfangseinheiten 101 und 102 gemäß Figur 1 eingesetzt werden kann.

Die Steuereinheit 130 umfasst eine Recheneinrichtung 200, bei der sich vorzugsweise um eine Mikroprozessoreinrichtung handelt, und einen Speicher 210. In dem Speicher 210 ist eine Vielzahl an Programmmodulen gespeichert, die von der Recheneinrichtung 200 ausgeführt werden können und bei Ausführung durch die Recheneinrichtung 200 vorzugsweise ein Kommunikationsmodul 220, ein Abstandsbestimmungsmodul 230, ein Abstandsänderungserkennungsmodul 240, ein Verzögerungsmodul 250 und ein Verifizierungsmodul 260 bilden.

Das Kommunikationsmodul 220 steht mit dem Sender 110 und dem Empfänger 120 in Verbindung und wickelt die optische Freistrahlkommunikationsverbindung 40 zwischen den beiden Sende- und Empfangseinheiten 101 und 102 ab.

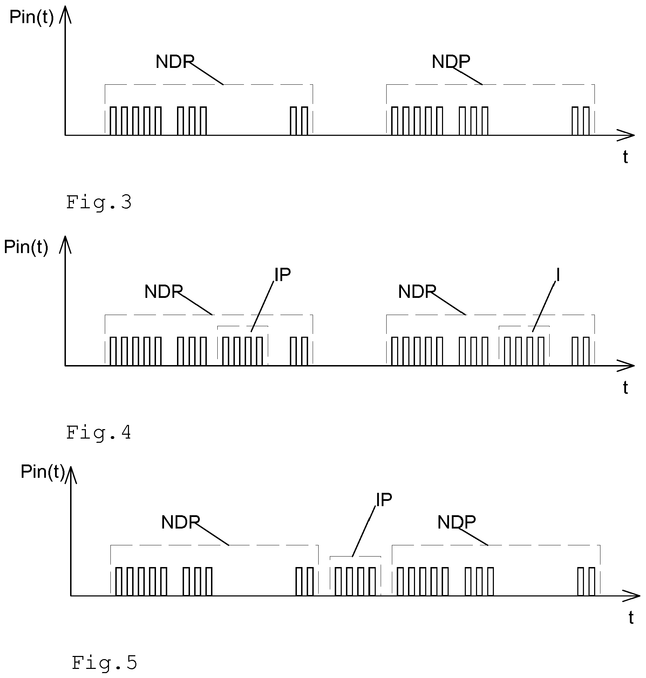

Die Figur 3 zeigt beispielhaft einen Strom an Nutzdatenpaketen NDP über der Zeit t, die von dem Kommunikationsmodul 220 zum Zwecke des Sendens erzeugt oder von dem Kommunikationsmodul 220 der jeweils anderen Sende- und Empfangseinheit empfangen werden können. In den Nutzdatenpaketen NDP können Prozessdaten und Steuerdaten zur Steuerung und zum Betrieb der Fördereinrichtung 10 übertragen werden.

Mit dem Kommunikationsmodul 220 steht das Abstandsbestimmungsmodul 230 in Verbindung. Die Aufgabe des Abstandsbestimmungsmoduls 230 besteht darin, Informationen I auszuwerten, die über die Freistrahlkommunikationsverbindung 40 zwischen den beiden Sende- und Empfangseinheiten übertragen werden und eine Abstandsbestimmung ermöglichen.

Die Informationen I können in ungenutzten Paketabschnitten der Nutzdatenpakete NDP übertragen werden, wie in der Figur 4 beispielhaft gezeigt ist, oder in separaten Informationspaketen IP, wie in der Figur 5 beispielhaft gezeigt ist.

Bei den Informationen I, die über die Freistrahlkommunikationsverbindung 40 übertragen werden, handelt es sich vorzugsweise um Zeitstempel.

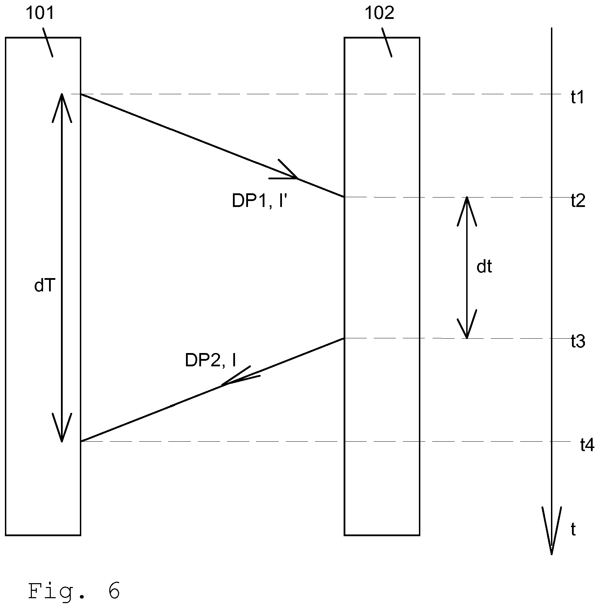

Im Zusammenhang mit Figuren 2 und 6 wird nachfolgend beispielhaft erläutert, wie anhand von empfangenen Zeitstempeln der zweiten Sende- und Empfangseinheit 102 die erste Sende- und Empfangseinheit 101 den Abstand S zur zweiten Sende- und Empfangseinheit 102 ermitteln kann:

Das Abstandsbestimmungsmodul 230 der ersten Sende- und Empfangseinheit 101 erfasst die Gesamtzeitspanne dT, die zwischen dem Wegsenden eines eigenen Datenpakets DP1 (z. B. Nutzdatenpaket oder separates Informationspaket) zur zweiten Sende- und Empfangseinheit 102 (siehe Zeitpunkt t1 in Figur 6) und dem nachfolgenden Empfang eines von der zweiten Sende- und Empfangseinheit 102 empfangenen Datenpakets DP2, nachfolgend auch Antwortdatenpaket genannt, vergeht (siehe Zeitpunkt t4 in Figur 6).

Das Abstandsbestimmungsmodul 230 der zweiten Sende- und Empfangseinheit 102 ermittelt die Zeitspanne dt, die zwischen dem Empfang des von der ersten Sende- und Empfangseinheit 101 gesendeten Datenpakets DP1 (siehe Zeitpunkt t2 in Figur 6) und dem darauf folgenden Wegsenden des Antwortdatenpakets (siehe Zeitpunkt t3 in Figur 6) zur ersten Sende- und Empfangseinheit 101 vergangen ist oder vergehen wird, und übermittelt diese erfasste Zeitspanne dt als Information I zu der ersten Sende- und Empfangseinheit 101. Die Zeitspanne dt wird durch Differenzbildung der Zeitpunkte t2 und t3 gebildet.

Anhand der Information I kann das Abstandsbestimmungsmodul 230 der ersten Sende- und Empfangseinheit 101 nun den Abstand ermitteln gemäß:

$$S = v \cdot \frac{dT - dt}{2}$$

- wobei dT die von der ersten Sende- und Empfangseinheit 101 selbst erfasste Gesamtzeitspanne bezeichnet,
- wobei dt die von der zweiten Sende- und Empfangseinheit 102 als Information I gesendete und von der ersten Sende- und Empfangseinheit 101 empfangene Zeitspanne bezeichnet,
- wobei v die Ausbreitungsgeschwindigkeit der optischen Strahlung bezeichnet und
- wobei S den Abstand bzw. einen absoluten Abstandsmesswert, der den Abstand zum Zeitpunkt t4 des Datenpaketempfangs in Figur 6 angibt, bezeichnet.

Um dem Abstandsbestimmungsmodul 230 der zweiten Sende- und Empfangseinheit 102 eine Abstandsbestimmung in identischer Weise zu ermöglichen, übermittelt das Abstandsbestimmungsmodul 230 der ersten Sende- und Empfangseinheit 101 ebenfalls jeweils die Zeitspanne (Information I'), die zwischen dem Empfang eines von der zweiten Sende- und Empfangseinheit 102 gesendeten Datenpakets (in Figur 6 nicht gezeigt) und dem darauf folgenden Wegsenden des Datenpakets DP1 zur zweiten Sende- und Empfangseinheit 102 vergangen ist oder vergehen wird. Anhand der empfangenen Information I' kann das Abstandsbestimmungsmodul 230 der zweiten Sende- und Empfangseinheit 102 den Abstand S in entsprechender oder identischer Weise errechnen, wie dies im Zusammenhang mit der ersten Sende- und Empfangseinheit 101 erläutert worden ist.

Die Abstandsbestimmungsmodule 230 der beiden Sende- und Empfangseinheiten ermöglichen somit eine regelmäßige absolute Messung des Abstandes S bzw. eine regelmäßige Bestimmung eines entsprechenden absolutes Abstandsmesswertes S zwischen den Sende- und Empfangseinheiten, und zwar entsprechend der zeitlichen Rate der übersendeten Datenpakete.

Die Abstandsbestimmungsmodule 230 der beiden Sende- und Empfangseinheiten tauschen vorzugsweise die von ihnen ermittelten Abstandswerte untereinander aus und vergleichen diese. Im Falle, dass die Abweichung zwischen den eigenen Abstandswerten und den von der jeweils anderen beiden Sende- und Empfangseinheit empfangenen Abstandswerte eine vorgegebene maximale Differenz erreicht oder überschreitet, erzeugen die Abstandsbestimmungsmodule 230 vorzugsweise ein Fehlersignal.

Um besonders schnell, und zwar insbesondere schneller als mit dem Abstandsbestimmungsmodul 230, eine Änderung des von dem Abstandsbestimmungsmodul 230 ermittelten Abstands S erkennen zu können, ist die Steuereinrichtung 130 gemäß Figur 2 mit dem Abstandsänderungserkennungsmodul 240 ausgestattet.

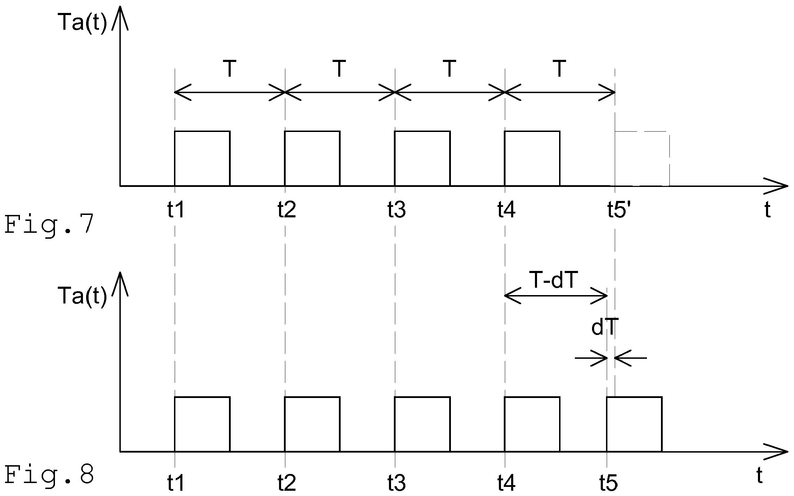

Das Abstandsänderungserkennungsmodul 240 steht mit dem Kommunikationsmodul 220 in Verbindung und erzeugt mit dem über die optische Freistrahlverbindung 40 empfangenen optischen Empfangssignal Pin(t), also mit dem Strom der eintreffenden Datenpakete (siehe Figuren 3 bis 5) ein Empfangstaktsignal Ta(t), das beispielhaft in der Figur 7 über der Zeit t gezeigt ist.

Anhand des Empfangstaktsignal Ta(t) kann das Abstandsänderungserkennungsmodul 240 die Zeitpunkte von ansteigenden und/oder abfallenden Flankenwechseln des Empfangstaktsignals über eine Vielzahl an Taktperioden zu erfassen. Bei dem Ausführungsbeispiel gemäß Figur 7 wird beispielhaft davon ausgegangen, dass das Abstandsänderungserkennungsmodul 240 jeweils die Zeitpunkte der ansteigenden Flankenwechsel auswertet; diese Zeitpunkte sind in der Figur 7 mit den Bezugszeichen t1 bis t4 gekennzeichnet.

Unter Heranziehung der Zeitpunkte t1 bis t4 in der Vergangenheit kann das Abstandsänderungserkennungsmodul 240 durch Mitteln die mittlere Periodenlänge T errechnen und mit der mittlere Periodenlänge T und dem Zeitpunkt des letzten Flankenwechsels den Zeitpunkt des jeweils nächsten Flankenwechsels unter Bildung eines geschätzten nachfolgenden Flankenwechselzeitpunkts t5' schätzen (siehe Figur 7) gemäß:

$$t5' = t4 + T$$

Anhand des geschätzten Flankenwechselzeitpunkts t5' und des tatsächlichen gemessenen Flankenwechselzeitpunkts t5 (siehe Figur 8) bzw. anhand der zeitlichen Differenz dT zwischen diesen Flankenwechselzeitpunkten kann die Änderung des Abstands S zwischen den Sende- und Empfangseinheiten 101 und 102 und ein entsprechender Abstandsänderungswert dS ermittelt werden gemäß:

$$dS = v\ dT = v\ (t5'-t5)$$

wobei v die Ausbreitungsgeschwindigkeit der optischen Strahlung bezeichnet.

Zur Bestimmung der zeitlichen Differenz dT kann das Abstandsänderungserkennungsmodul 240 einen Zählerbaustein 241 aufweisen, der jeweils bei ansteigender Flanke des aktuell erzeugten Empfangstaktsignals Ta(t) einen Zeitstempel in Form des jeweiligen Zählerstands erzeugt.

Die zeitliche Differenz dT zwischen dem geschätzten Flankenwechselzeitpunkt t5' und dem tatsächlichen Flankenwechselzeitpunkt t5 kann bei einer solchen Ausgestaltung anhand der Differenz zwischen dem geschätzten Zählerstand Zg beim geschätzten Flankenwechselzeitpunkt t5' und dem tatsächlichen Zählerstand Zt bei dem tatsächlichen Flankenwechselzeitpunkt t5 ermittelt werden gemäß:

$$dT = (Zg-Zt)\ /\ fT$$

wobei fT die Zählerrate bzw. die Zählertaktfrequenz bezeichnet.

Bei dem Ausführungsbeispiel gemäß den Figuren 7 und 8 wird das Abstandsänderungserkennungsmodul 240 also feststellen, dass sich der Abstand S zwischen den beiden Sende- und Empfangseinheiten 101 und 102 um den Abstandsänderungswert dS reduziert hat, da die Anstiegsflanke früher als prognostiziert eingetroffen ist.

Das Abstandsänderungserkennungsmodul 240 wird den Abstandsänderungswert dS vorzugsweise an das Abstandsbestimmungsmodul 230 übermitteln, das den zuvor ermittelten Abstandswert Sa entsprechend korrigieren wird und einen neuen Abstandswert S durch vorzeichenrichtige Addition mit dem Abstandsänderungswert dS (hier dS < 0) erzeugt gemäß:

$$S = Sa + dS$$

Die Abstandsbestimmungsmodule 230 der beiden Sende- und Empfangseinheiten können die korrigierten neuen Abstandswerte austauschen und vergleichen. Im Falle, dass die Abweichung zwischen den eigenen korrigierten Abstandswerten und den von der jeweils anderen Sende- und Empfangseinheit empfangenen korrigierten Abstandswerten eine vorgegebene maximale Differenz erreicht oder überschreitet, erzeugen die Abstandsbestimmungsmodule 230 vorzugsweise ein Fehlersignal.

Um erkennen zu können, ob die korrigierten neuen Abstandswerte tatsächlich von der jeweils anderen zugeordneten Sende- und Empfangseinheit stammen und/oder fehlerfrei übertragen worden sind, wird vorzugsweise mit bzw. von den korrigierten neuen Abstandswerten jeweils eine Prüfsumme gebildet und die Prüfsummen werden zusammen mit den korrigierten neuen Abstandsmesswerten an die jeweils andere Sende- und Empfangseinheiten übermittelt, damit letztere eine Prüfung der empfangenen Abstandsmesswerte auf Fehlerfreiheit bzw. korrekte Herkunft vornehmen kann. Zur sendeseitigen Bildung der Prüfsummen weisen die Kommunikationsmodule 220 vorzugsweise jeweils ein Prüfsummenbildungsmodul 221 auf.

Das oben im Zusammenhang mit der Figur 2 erwähnte Verzögerungsmodul 250 der Steuereinrichtung 130 steht vorzugsweise mit dem Kommunikationsmodul 220 und dem Abstandsbestimmungsmodul 230 in Verbindung.

Die Funktion des Verzögerungsmoduls 250 der Steuereinrichtung 130 besteht darin, für die zu senden Datenpakete, oder zumindest für eine vorgegebene Art an Datenpaketen wie beispielsweise die Nutzdatenpakete NDP oder die separaten Informationspakete IP gemäß den Figuren 2 bis 5, jeweils eine Pufferzeitspanne PTS ermitteln, für die das jeweilige Datenpaket vor dem Versenden zu der jeweils anderen Sende- und Empfangseinheit zwischengespeichert werden soll. Zum Zwischenspeichern der Datenpakete dient ein einen Datenpuffer bildender Verzögerungsspeicher 251 in Figur 2.

Die Pufferzeitspannen PZS werden für jedes Datenpaket jeweils derart ermittelt, dass diese einer vorgegebenen maximalen Pufferzeitspanne abzüglich der von dem Verzögerungsmodul 250 prognostizierten Laufzeit des jeweiligen Datenpakets zu der jeweils anderen Sende- und Empfangseinheit entsprechen. Mit anderen Worten soll also bevorzugt gelten:

$$PZS = PZSmax - tL,$$

wobei PZS die Pufferzeitspanne, PZSmax die vorgegebene maximale Pufferzeitspanne und tL die prognostizierte Laufzeit des jeweiligen Datenpakets zu der jeweils anderen Sende- und Empfangseinheit bezeichnet.

Zur Bestimmung der prognostizierten Laufzeit tL wertet das Verzögerungsmodul 250 vorzugsweise den von dem Abstandsbestimmungsmodul 230 ermittelten Abstand S zwischen den beiden Sende- und Empfangseinheiten 101 und 102 sowie den von dem Abstandsänderungserkennungsmodul 240 ermittelten Abstandsänderungswert dS aus und bestimmt die prognostizierte Laufzeit tL gemäß:

$$tL = Sk / v$$

wobei v die Ausbreitungsgeschwindigkeit der optischen Strahlung und Sk den um den Abstandsänderungswert dS des Abstandsänderungserkennungsmoduls 240 korrigierten Abstandswert S des Abstandsbestimmungsmoduls 230 (Sk = S + ds) bezeichnet.

Die vorgegebene maximale Pufferzeitspanne PZSmax wird vorzugsweise ermittelt in Abhängigkeit von der maximal möglichen bzw. zulässigen Entfernung Smax zwischen den Sende- und Empfangseinheiten 101 und 102. Vorzugsweise wird die maximale Pufferzeitspanne PZSmax ermittelt gemäß:

$$PZSmax = Smax/v$$

Die Speichergröße SG des Verzögerungsspeichers 251 ist bevorzugt derart gewählt, dass dieser für die maximale Pufferzeitspanne PZSmax Daten speichern kann. Im Falle einer Datenrate fd auf der optischen Freistrahlkommunikationsverbindung 40 ergibt sich die minimale Speichergröße SGmin wie folgt:

$$SG \geq SGmin = PSMmax * fd$$

Durch die Pufferung mittels des Verzögerungsmoduls 250 im Verzögerungsspeicher 251 wird erreicht, dass alle Datenpakete unabhängig von dem jeweiligen räumlichen Abstand zwischen den Sende- und Empfangseinheiten 101 und 102 stets in demselben zeitlichen Abstand eintreffen, und der "Pakettakt" bzw. die Paketrate abstandsunabhängig ist.

Das oben im Zusammenhang mit der Figur 2 erwähnte Verifizierungsmodul 260 der Steuereinrichtung 130 steht vorzugsweise mit dem Kommunikationsmodul 230 in Verbindung und überwacht das eingehende Empfangssignal Pin(t) und damit die mit dem Empfangssignal Pin(t) übertragenen Datenpakete oder eine vorgegebene Auswahl an Datenpaketen auf das Vorhandensein einer Gerätekennung, die die jeweils andere Sende- und Empfangseinheit 101 bzw. 102 eindeutig identifiziert.

Das Verifizierungsmodul 260 kann alle Datenpakete hinsichtlich der Gerätekennung überprüfen, also unabhängig davon, ob diese zur Abstandsbestimmung geeignete Abstands- oder Zeitstempelinformationen enthalten oder nicht, oder alternativ zur Entlastung ausschließlich Datenpakete mit Abstands- oder Zeitstempelinformationen. Beispielsweise in dem Falle, dass separate Informationspakete IP mit Abstands- oder Zeitstempelinformationen empfangen werden (siehe Figur 5), werden vorzugsweise ausschließlich die separaten Informationspakete IP auf die gültige Gerätekennung hin untersucht.

Vorzugsweise wird das Verifizierungsmodul 260 Datenpakete oder zumindest deren Informationen zur Bestimmung der räumlichen Entfernung zwischen den beiden Sende- und Empfangseinheiten 101 und 102 blockieren oder verwerfen, wenn keine korrekte, also keine die jeweils andere Sende- und Empfangseinheit 101 bzw. 102 eindeutig identifizierende, Gerätekennung aufgefunden wird.

Falls das Verifizierungsmodul 260 ausschließlich im Zusammenhang mit der Auswertung von Abstands- oder Zeitstempelinformationen herangezogen wird, ist es vorteilhaft, wenn das Verifizierungsmodul 260 mit dem Abstandsbestimmungsmodul 230 oder bevorzugt sogar ausschließlich mit dem Abstandsbestimmungsmodul 230 in Verbindung steht und eine Herkunfts- bzw. Gerätekennungsprüfung nur im Zusammenhang mit Datenpaketen durchführt, die wegen das Vorhandenseins von Abstands- oder Zeitstempelinformationen von dem Abstandsbestimmungsmodul 230 verwertet werden sollen.

Als besonders vorteilhaft wird es angesehen, wenn das Verifizierungsmodul 260 zur Verifizierung ein Prüfsummenkontrollmodul 261 aufweist.

Das Prüfsummenkontrollmodul 261 wertet eine in dem Empfangssignal Pin(t) (vgl. Figuren 3 bis 5), insbesondere in dem jeweils empfangenen Datenpaket, enthaltene Prüfsumme aus und untersucht diese auf Fehlerfreiheit der empfangenen Daten. Um eine solche Fehlerüberprüfung und ggf. sogar eine Fehlerkorrektur zu ermöglichen, übersenden die Kommunikationsmodule 220 der beiden Sende- und Empfangseinheiten 101 bzw. 102 eine Prüfsumme bevorzugt

- jeweils für jedes Datenpaket,
- jeweils für die im jeweiligen Datenpaket enthaltene Gerätekennung und/oder
- jeweils für die im jeweiligen Datenpaket enthaltene Abstands- oder Zeitstempelinformation.

Bei der Prüfsumme handelt es sich vorzugsweise um einen CRC-Code (zyklischer Redundanzprüfungscode).

Vorzugsweise wird das Prüfsummenkontrollmodul 261 im Rahmen der Fehlerprüfung in dem Empfangssignal Pin(t) enthaltene Abstands- oder Zeitstempelinformation ausschließlich dann zur Weiterverwendung und weiteren Auswertung (also Abstandsbestimmung) durch das Abstandsbestimmungsmodul 230 freigeben, wenn die Fehlerprüfung die Fehlerfreiheit der empfangenen Gerätekennung und/oder die Fehlerfreiheit der Abstands- oder Zeitstempelinformation bestätigt oder sich vorhandene Fehler korrigieren lassen. Andernfalls wird das Prüfsummenkontrollmodul 261 die Weiterverwendung und weitere Auswertung der fehlerhaften Datenpakete durch das Abstandsbestimmungsmodul 230 blockieren.

Das Prüfsummenkontrollmodul 261 ist vorzugsweise derart ausgestaltet, dass es CRC-Codes bearbeiten und eine Fehlerprüfung und Fehlerkorrektur im Rahmen einer zyklische Redundanzprüfung vornehmen kann.

Um sendeseitig entsprechende Prüfsummen in oder mit den Datenpaketen senden zu können, die von dem empfängerseitigen Prüfsummenkontrollmodul 261 ausgewertet werden können, weisen die Kommunikationsmodule 220 jeweils ein Prüfsummenbildungsmodul 221 auf. Das Prüfsummenbildungsmodul 221 bildet und versendet Prüfsummen bevorzugt

- jeweils für jedes Datenpaket,
- jeweils für die im jeweiligen Datenpaket enthaltene Gerätekennung und/oder
- jeweils für die im jeweiligen Datenpaket enthaltene Abstands- oder Zeitstempelinformation.

Obwohl die Erfindung im Detail durch bevorzugte Ausführungsbeispiele näher illustriert und beschrieben wurde, so ist die Erfindung nicht auf die offenbarten Beispiele beschränkt. Andere Variationen können vom Fachmann aus den offenbarten Beispielen abgeleitet werden, ohne den Schutzumfang der Erfindung zu verlassen.

Bezugszeichen

| 10 | Fördereinrichtung |
| 11 | Abschnitt der Fördereinrichtung |
| 10 | erste Sende- und Empfangseinheit |
| 20 | verfahrbare Transporteinrichtung |
| 30 | Freistrahlkommunikationssystem |
| 40 | optische Freistrahlkommunikationsverbindung |
| 102 | zweite Sende- und Empfangseinheit |
| 110 | Sender |
| 120 | Empfänger |
| 130 | Steuereinheit |
| 200 | Recheneinrichtung |
| 210 | Speicher |
| 220 | Kommunikationsmodul |
| 221 | Prüfsummenbildungsmodul |
| 230 | Abstandsbestimmungsmodul |
| 240 | Abstandsänderungserkennungsmodul |
| 241 | Zählerbaustein |
| 250 | Verzögerungsmodul |
| 251 | Verzögerungsspeicher |
| 260 | Verifizierungsmodul |
| 261 | Prüfsummenkontrollmodul |

| dS | Abstandsänderungswert |
| dT, dt | Zeitspannen |
| DP1, DP2 | Datenpakete |
| I | Information |
| IP | Informationspaket |
| NDP | Nutzdatenpakete |
| Pin(t) | Empfangssignal |
| PZS | Pufferzeitspanne |
| S | Abstand/räumliche Entfernung |
| t | Zeit |
| t1-t5, t5' | Zeitpunkte |
| T | Periodenlänge |
| Ta(t) | Empfangstaktsignal |
| X | Pfeilrichtung |

**Patentansprüche**

1. Fördereinrichtung (10) mit mindestens einer verfahrbaren Transporteinrichtung (20), wobei

   - die Fördereinrichtung (10) ein optisches Freistrahlkommunikationssystem (30) aufweist mit mindestens zwei Sende- und Empfangseinheiten (101, 102), die jeweils einen Sender (110), einen Empfänger (120) und eine Steuereinheit (130) umfassen und von denen eine an der verfahrbaren Transporteinrichtung (20) und die andere an einem anderen Abschnitt (11) der Fördereinrichtung (10) befestigt ist,
   - wobei die mindestens zwei Sende- und Empfangseinheiten (101, 102) in einer optischen Freistrahlverbindung (40) stehen und eine Übermittlung von Datenpaketen ermöglichen,
   - **dadurch gekennzeichnet, dass** zumindest eine der, vorzugsweise beide der zumindest zwei, Sende- und Empfangseinheiten (101, 102) dazu ausgebildet ist, aus über die optische Freistrahlverbindung (40) empfangenen optischen Empfangssignalen ein Empfangstaktsignal (Ta(t)) zu erzeugen, die Zeitpunkte von ansteigenden und/oder abfallenden Flankenwechseln des Empfangstaktsignals (Ta(t)) über eine Vielzahl an Taktperioden zu erfassen, unter Heranziehung der Zeitpunkte in der Vergangenheit den Zeitpunkt des jeweils nächsten Flankenwechsels unter Bildung eines geschätzten Flankenwechselzeitpunkts zu schätzen und anhand des geschätzten Flankenwechselzeitpunkts und des tatsächlichen Flankenwechselzeitpunkts einen eine Abstandsänderung zwischen den Sende- und Empfangseinheiten (101, 102) angebenden Abstandsänderungswert (dS) zu bilden.

2. Fördereinrichtung (10) nach Anspruch 1, **dadurch gekennzeichnet, dass**

   - die Sende- und Empfangseinheit (101, 102) die zeitliche Differenz zwischen dem geschätzten Flankenwechselzeitpunkt und dem tatsächlichen Flankenwechselzeitpunkt ermittelt und
   - den Abstandsänderungswert (dS) unter Heranziehung der zeitlichen Differenz bildet.

3. Fördereinrichtung (10) nach einem der voranstehenden Ansprüche, **dadurch gekennzeichnet, dass** die Sende- und Empfangseinheit (101, 102) einen Zählerbaustein (241) aufweist, der jeweils bei ansteigender und/oder abfallender Flanke des aktuell erzeugten Empfangstaktsignals (Ta(t)) einen Zeitstempel, insbesondere einen Zählerstand, erzeugt.

4. Fördereinrichtung (10) nach Anspruch 3, **dadurch gekennzeichnet, dass** der Zählerbaustein (241) den Zeitstempel in Form des jeweiligen Zählerstands erzeugt und die Sende- und Empfangseinheit (101, 102) die zeitliche Differenz zwischen dem geschätzten Flankenwechselzeitpunkt und dem tatsächlichen Flankenwechselzeitpunkt anhand der Differenz zwischen einem geschätzten Zählerstand beim geschätzten Flankenwechselzeitpunkt und dem tatsächlichen Zählerstand bei dem tatsächlichen Flankenwechselzeitpunkt ermittelt.

5. Fördereinrichtung (10) nach einem der voranstehenden Ansprüche, **dadurch gekennzeichnet, dass** die Sende- und Empfangseinheit (101, 102) derart ausgestaltet ist, dass sie zusätzlich zu dem Abstandsänderungswert (dS) einen den Abstand zwischen den Sende- und Empfangseinheiten (101, 102) angebenden, absoluten Abstandsmesswert bestimmt.

6. Fördereinrichtung (10) nach Anspruch 5, **dadurch gekennzeichnet, dass** die Sende- und Empfangseinheit (101, 102) derart ausgestaltet ist, dass sie den absoluten Abstandsmesswert und den auf diesen zeitlich bezogenen Abstandsänderungswert (dS) - vorzeichenrichtig - addiert und den Summenwert als tatsächlichen bzw. aktualisierten Abstandsmesswert weiterverwendet.

7. Fördereinrichtung (10) nach einem der voranstehenden Ansprüche, **dadurch gekennzeichnet, dass** die Steuereinheit (130) der Sende- und Empfangseinheit (101, 102), nachfolgend erste Sende- und Empfangseinheit (101, 102) genannt, derart ausgestaltet ist, dass sie den absoluten Abstandsmesswert unter Heranziehung einer Information oder mehrerer Informationen ermittelt, die über die optische Freistrahlverbindung (40) von der jeweils anderen Sende- und Empfangseinheit (101, 102), nachfolgend zweite Sende- und Empfangseinheit (101, 102) genannt, empfangen werden.

8. Fördereinrichtung (10) nach Anspruch 7, **dadurch gekennzeichnet, dass** die Steuereinheit (130) der zweiten Sende- und Empfangseinheit (101, 102) derart ausgestaltet ist, dass sie mittels ihres Senders die Information, die Informationen, Teile der Information oder Teile der Informationen in ungenutzten Paketabschnitten von Nutzdatenpakete überträgt.

9. Fördereinrichtung (10) nach einem der voranstehenden Ansprüche 7 bis 8, **dadurch gekennzeichnet, dass** die Steuereinheit (130) der zweiten Sende- und Empfangseinheit (101, 102) derart ausgestaltet ist, dass sie mittels ihres Senders die Information, die Informationen, Teile der Information oder Teile der Informationen in separaten Informationspaketen überträgt, die zwischen Nutzdatenpaketen, insbesondere unmittelbar vor oder hinter Nutzdatenpaketen, gesendet werden.

10. Fördereinrichtung (10) nach einem der voranstehenden Ansprüche 7 bis 9, **dadurch gekennzeichnet, dass** die Steuereinheit (130) der zweiten Sende- und Empfangseinheit (101, 102) derart ausgestaltet ist, dass sie

    - die Zeitspanne erfasst oder ermittelt, die zwischen dem Empfang eines von der einen ersten Sende- und Empfangseinheit (101, 102) gesendeten Datenpakets und dem darauf folgenden Wegsenden eines Datenpakets zur ersten Sende- und Empfangseinheit (101, 102) vergangen ist oder vergehen wird, und

- als die Information oder eine der Informationen die erfasste Zeitspanne zur ersten Sende- und Empfangseinheit (101, 102) übermittelt.

11. Fördereinrichtung (10) nach einem der voranstehenden Ansprüche 7 bis 10,
**dadurch gekennzeichnet, dass**
die Steuereinheit (130) der ersten Sende- und Empfangseinheit (101, 102) derart ausgestaltet ist, dass sie

- die Gesamtzeitspanne erfasst, die zwischen dem Wegsenden des eigenen Datenpakets zur zweiten Sende- und Empfangseinheit (101, 102) und dem Empfang des von der zweiten Sende- und Empfangseinheit (101, 102) empfangenen Datenpakets vergeht, und
- den Abstand anhand der selbst erfassten Gesamtzeitspanne und der von der zweiten Sende- und Empfangseinheit (101, 102) erfassten und als Information empfangenen Zeitspanne ermittelt.

12. Fördereinrichtung (10) nach einem der voranstehenden Ansprüche 7 bis 11,
**dadurch gekennzeichnet, dass**
die Steuereinheit (130) der ersten Sende- und Empfangseinheit (101, 102) derart ausgestaltet ist, dass sie den Abstand, insbesondere den erwähnten absoluten Abstandsmesswert, ermittelt gemäß:

$$S = v \cdot \frac{dT - dt}{2}$$

- wobei dT die selbst erfasste Gesamtzeitspanne bezeichnet,
- wobei dt die von der zweiten Sende- und Empfangseinheit (101, 102) als Information empfangene Zeitspanne bezeichnet,
- wobei v die Ausbreitungsgeschwindigkeit der optischen Strahlung bezeichnet und
- wobei S den Abstand bzw. den absoluten Abstandsmesswert bezeichnet.

13. Fördereinrichtung (10) nach einem der voranstehenden Ansprüche 7 bis 12,
**dadurch gekennzeichnet, dass**
die mindestens zwei Sende- und Empfangseinheiten (101, 102) jeweils derart ausgestaltet sind, dass sie sowohl als die eine als auch als die andere Sende- und Empfangseinheit (101, 102) bzw. sowohl als die erste als auch als die zweite Sende- und Empfangseinheit (101, 102) arbeiten.

14. Fördereinrichtung (10) nach einem der voranstehenden Ansprüche,
**dadurch gekennzeichnet, dass**

- die Fördereinrichtung (10) eine Hebeeinrichtung, einen Aufzug oder einen Kran bildet und/oder
- die verfahrbare Transporteinrichtung (20) eine linear verfahrbare Transporteinrichtung (20), ein Verfahrwagen eines Lagers, insbesondere Regallagers, ein Hubelement einer Hebeeinrichtung oder eine Kabine oder ein verfahrbares Hebeelement eines Aufzugs ist oder bildet.

15. Verfahren zum Betreiben einer Fördereinrichtung (10), wobei

- der räumliche Abstand zwischen einer verfahrbaren Transporteinrichtung (20) der Fördereinrichtung (10) und einem anderen, insbesondere ortsfesten, Abschnitt (11) der Fördereinrichtung (10) ermittelt wird,
- wobei zwei Sende- und Empfangseinheiten (101, 102), die jeweils einen Sender (110), einen Empfänger (120) und eine Steuereinheit (130) umfassen und von denen eine an der verfahrbaren Transporteinrichtung (20) und die andere an einem anderen Abschnitt (11) der Fördereinrichtung (10) befestigt ist, in einer optischen Freistrahlverbindung (40) betrieben werden und eine Übermittlung von Datenpaketen erfolgt,
- **dadurch gekennzeichnet, dass** zumindest eine der, vorzugsweise beide der zumindest zwei, Sende- und Empfangseinheiten (101, 102) aus den über die optische Freistrahlverbindung (40) empfangenen optischen Empfangssignalen ein Empfangstaktsignal (Ta(t)) erzeugt, die Zeitpunkte von ansteigenden und/oder abfallenden Flankenwechseln des Empfangstaktsignals (Ta(t)) über eine Vielzahl an Taktperioden erfasst, unter Heranziehung der Zeitpunkte in der Vergangenheit den Zeitpunkt des jeweils nächsten Flankenwechsels unter Bildung eines geschätzten Flankenwechselzeitpunkts schätzt und anhand des geschätzten Flankenwechselzeitpunkts und des tatsächlichen Flankenwechselzeitpunkts einen eine Abstandsänderung zwischen den Sende- und Empfangseinheiten (101, 102) angebenden Abstandsänderungswert (dS) bildet.

**Claims**

1. Conveying device (10) having at least one movable transport device (20),
wherein

- the conveying device (10) has an optical free-beam communication system (30) having at least two transmission and reception units (101, 102), each of which comprises a transmitter (110), a receiver (120) and a control unit (130) and one of which is mounted on the movable transport device (20) and the other of which is mounted on another section (11) of the conveying device (10),
- wherein the at least two transmission and reception units (101, 102) are in an optical free-beam connection (40) and allow transmission of data packets,
- **characterized in that**
at least one of the, preferably both of the at least two, transmission and reception units (101, 102) is/are designed to generate a received clock signal (Ta(t)) from optical received signals received via the optical free-beam connection (40), capture the times of rising and/or falling edge changes in the received clock signal (Ta(t)) over a multiplicity of clock periods, use the times in the past to estimate the time of the respective next edge change to form an estimated edge change time and use the estimated edge change time and the actual edge change time to form a distance change value (dS) indicating a change of distance between the transmission and reception units (101, 102).

2. Conveying device (10) according to Claim 1, **characterized in that**

- the transmission and reception unit (101, 102) ascertains the time difference between the estimated edge change time and the actual edge change time and
- forms the distance change value (dS) using the time difference.

3. Conveying device (10) according to either of the preceding claims, **characterized in that** the transmission and reception unit (101, 102) has a counter chip (241) that produces a time stamp, in particular a count, on each rising and/or falling edge of the currently generated received clock signal (Ta(t)).

4. Conveying device (10) according to Claim 3, **characterized in that** the counter chip (241) produces the time stamp in the form of the respective count and the transmission and reception unit (101, 102) ascertains the time difference between the estimated edge change time and the actual edge change time on the basis of the difference between an estimated count for the estimated edge change time and the actual count for the actual edge change time.

5. Conveying device (10) according to one of the preceding claims,

**characterized in that**
the transmission and reception unit (101, 102) is configured such that it determines, in addition to the distance change value (dS), an absolute distance measured value indicating the distance between the transmission and reception units (101, 102).

6. Conveying device (10) according to Claim 5, **characterized in that**
the transmission and reception unit (101, 102) is configured such that it adds the absolute distance measured value and the distance change value (dS) referenced to the timing thereof - using the correct arithmetic sign - and continues using the summed value as the actual or updated distance measured value.

7. Conveying device (10) according to one of the preceding claims,
**characterized in that** the control unit (130) of the transmission and reception unit (101, 102), subsequently called first transmission and reception unit (101, 102), is configured such that it ascertains the absolute distance measured value by using a piece of information or multiple pieces of information received via the optical free-beam connection (40) respectively from the other transmission and reception unit (101, 102), subsequently called second transmission and reception unit (101, 102).

8. Conveying device (10) according to Claim 7, **characterized in that**
the control unit (130) of the second transmission and reception unit (101, 102) is configured such that it uses its transmitter to transmit the piece of information, the pieces of information, parts of the piece of information or parts of the pieces of information in unused packet sections of useful data packets.

9. Conveying device (10) according to either of the preceding Claims 7 and 8,
**characterized in that**
the control unit (130) of the second transmission and reception unit (101, 102) is configured such that it uses its transmitter to transmit the piece of information, the pieces of information, parts of the piece of information or parts of the pieces of information in separate information packets sent between useful data packets, in particular immediately in front of or behind useful data packets.

10. Conveying device (10) according to one of the preceding Claims 7 to 9,
**characterized in that**
the control unit (130) of the second transmission and reception unit (101, 102) is configured such that it

- captures or ascertains the period that has elapsed or will elapse between the reception of data packet sent by the one first transmission and reception unit (101, 102) and the subsequent sending of a data packet to the first transmission and reception unit (101, 102), and

- transmits the captured period to the first transmission and reception unit (101, 102) as the piece of information or one of the pieces of information.

11. Conveying device (10) according to one of the preceding Claims 7 to 10,
    **characterized in that**
    the control unit (130) of the first transmission and reception unit (101, 102) is configured such that it

    - captures the total period that elapses between the sending of its own data packet to the second transmission and reception unit (101, 102) and the reception of the data packet received from the second transmission and reception unit (101, 102), and
    - ascertains the distance on the basis of the self-captured total period and the period captured by the second transmission and reception unit (101, 102) and received as information.

12. Conveying device (10) according to one of the preceding Claims 7 to 11,
    **characterized in that**
    the control unit (130) of the first transmission and reception unit (101, 102) is configured such that it ascertains the distance, in particular the aforementioned absolute distance measured value, according to:

$$S = v \cdot \frac{dT - dt}{2}$$

    - where dT denotes the self-captured total period,
    - where dt denotes the period received from the other transmission and reception unit (101, 102) as information,
    - where v denotes the propagation speed of the optical radiation, and
    - where S denotes the distance or the absolute distance measured value.

13. Conveying device (10) according to one of the preceding Claims 7 to 12,
    **characterized in that**
    the at least two transmission and reception units (101, 102) are each configured such that they operate both as the one and the other transmission and reception unit (101, 102) or both as the first and the second transmission and reception unit (101, 102).

14. Conveying device (10) according to one of the preceding claims,
    **characterized in that**

    - the conveying device (10) forms a lifting device, a lift or a crane and/or
    - the movable transport device (20) is or forms a linearly movable transport device (20), a moving carriage in a store, in particular a shelf store, a lifting element of a lifting device or a car or a movable lifting element of a lift.

15. Method for operating a conveying device (10), wherein

    - the physical distance between a movable transport device (20) of the conveying device (10) and another, in particular fixed, section (11) of the conveying device (10) is ascertained,
    - wherein at least two transmission and reception units (101, 102), which each comprise a transmitter (110), a receiver (120) and a control unit (130) and one of which is mounted on the movable transport device (20) and the other of which is mounted on another section (11) of the conveying device (10), are operated in an optical free-beam connection (40), and a transmission of data packets is effected, **characterized in that**
    - at least one of the, preferably both of the at least two, transmission and reception units (101, 102), generates a received clock signal (Ta(t), from the optical received signals received via the optical free-beam connection (40), captures the times of rising and/or falling edge changes in the received clock signal (ta(t)) over a multiplicity of clock periods, uses the times in the past to estimate the time of the respective next edge change to form an estimated edge change time and uses the estimated edge change time and the actual edge change time to form a distance change value (dS) indicating a change of distance between the transmission and reception units (101, 102) .

**Revendications**

1. Système de convoyage (10), avec au moins un système de transport (20) déplaçable,

    - le système de convoyage (10) présentant un système de communication à faisceau libre (30) optique avec au moins deux unités d'émission et de réception (101, 102) qui comprennent respectivement un émetteur (110), un récepteur (120) et une unité de commande (130) et dont l'une est fixée sur le système de transport (20) déplaçable et l'autre sur un autre tronçon (11) du système de convoyage (10),

- les deux ou plusieurs unités d'émission et de réception (101, 102) étant dans une relation de faisceau libre (40) optique et permettant une transmission de paquets de données,

- **caractérisé en ce qu'**au moins une des, de préférence tous les deux des deux ou plusieurs, unités d'émission et de réception (101, 102) est/sont conçue(s) pour, à partir de signaux de réception optiques reçus via la relation de faisceau libre (40) optique, produire un signal d'horloge de réception (Ta(t)), détecter les moments de changements de flanc montants et/ou descendants du signal d'horloge de réception (Ta(t)) sur une multiplicité de périodes d'horloge, estimer, en faisant appel aux moments dans le passé, le moment du changement de flanc suivant respectif en formant un moment de changement de flanc estimé et, à l'aide du moment de changement de flanc estimé et du moment de changement de flanc effectif, former une valeur de variation de distance (dS) indiquant une variation de distance entre les unités d'émission et de réception (101, 102) .

2. Système de convoyage (10) selon la revendication 1, **caractérisé en ce que**

   - l'unité d'émission et de réception (101, 102) détermine la différence temporelle entre le moment de changement de flanc estimé et le moment effectif de changement de flanc et
   - forme la valeur (dS) de modification de distance en faisant intervenir la différence temporelle.

3. Système de convoyage (10) selon l'une des revendications précédentes, **caractérisé en ce que** l'unité d'émission et de réception (101, 102) présente un module de comptage (241) qui forme un tampon temporel, en particulier un état du compteur, lors de chaque flanc montant et ou descendant du signal de réception d'horloge (Ta(t)) effectivement formé.

4. Système de convoyage (10) selon la revendication 3, **caractérisé en ce que** le module de comptage (241) forme le tampon temporel sous la forme de l'état du compteur respectif et l'unité d'émission et de réception (101, 102) détermine la différence temporelle entre le moment estimé de changement de flanc et le moment effectif de changement de flanc à l'aide de la différence entre un état estimé du compteur au moment estimé de changement de flanc et l'état effectif du compteur au moment effectif de changement de flanc.

5. Système de convoyage (10) selon l'une des revendications précédentes,

**caractérisé en ce que**
l'unité d'émission et de réception (101, 102) est constituée de telle sorte que, en plus de la valeur de variation de distance (dS), elle détermine une valeur de mesure de distance absolue indiquant la distance entre les unités d'émission et de réception (101, 102).

6. Système de convoyage (10) selon la revendication 5, **caractérisé en ce que**
l'unité d'émission et de réception (101, 102) est constituée de telle sorte qu'elle additionne la valeur de mesure de distance absolue et la valeur (dS) de modification de distance rapportée temporellement à cette dernière en conservant le signe, et réutilise la somme en tant que valeur de mesure de distance effective ou actualisée.

7. Système de convoyage (10) selon l'une des revendications précédentes, **caractérisé en ce que** l'unité de commande (130) de l'unité d'émission et de réception (101, 102), appelée dans ce qui suit première unité d'émission et de reception (101, 102), est configurée de telle sorte qu'elle détermine la valeur absolue de mesure de distance en tenant compte d'une information ou de plusieurs informations reçues de l'autre unité d'émission et de réception (101, 102), appelée dans ce qui suit deuxième unité d'émission et de réception (101, 102), par l'intermédiaire de la liaison optique (40) à faisceau libre.

8. Système de convoyage (10) selon la revendication 7, **caractérisé en ce que** l'unité de commande (130) de la deuxième unité d'émission et de réception (101, 102) est configurée de telle sorte qu'elle transmet au moyen de son émetteur l'information, les informations, des parties de l'information ou des parties des informations dans des sections inutilisées de paquets de données utiles.

9. Système de convoyage (10) selon l'une des revendications 7 à 8 précédentes, **caractérisé en ce que** l'unité de commande (130) de la deuxième unité d'émission et de réception (101, 102) est configurée de telle sorte qu'elle transmet au moyen de son émetteur l'information, les informations, des parties de l'information ou des parties des informations dans des paquets d'informations séparés qui sont envoyés entre des paquets de données utiles, et en particulier directement avant ou après des paquets de données utiles.

10. Système de convoyage (10) selon l'une des revendications 7 à 9 précédentes, **caractérisé en ce que** l'unité de commande (130) de la deuxième unité d'émission et de réception (101, 102) est configurée de telle sorte qu'elle

- saisit ou détermine la durée qui s'est écoulée ou qui s'écoule entre la réception d'un paquet de données envoyé par l'une des premières unités d'émission et de réception (101, 102) et l'envoi suivant d'un paquet de données vers la première unité d'émission et de réception (101, 102) et

- transmet en tant qu'information ou que l'une des informations à la première unité (101, 102) d'émission et de réception la durée saisie.

11. Système de convoyage (10) selon l'une des revendications 7 à 10 précédentes, **caractérisé en ce que** l'unité de commande (130) de la première unité d'émission et de réception (101, 102) est configurée de telle sorte qu'elle

- saisit la durée totale qui s'écoule entre l'envoi du paquet de données propre à la deuxième unité d'émission et de réception (101, 102) et la réception du paquet de données reçu par la deuxième unité d'émission et de réception (101, 102) et

- détermine la distance à l'aide de la durée totale propre saisie et de la durée saisie par la deuxième unité d'émission et de réception (101, 102) et reçue en tant qu'information.

12. Système de convoyage (10) selon l'une des revendications 7 à 11 précédentes, **caractérisé en ce que** l'unité de commande (130) de la première unité d'émission et de réception (101, 102) est constituée de telle sorte qu'elle détermine la distance, en particulier la valeur de mesure de distance absolue mentionnée, selon :

$$S = v \cdot \frac{dT - dt}{2}$$

- dT désignant le laps de temps total détecté en propre,
- dt désignant le laps de temps reçu en tant qu'information en provenance de l'autre unité d'émission et de réception (101, 102),
- v désignant la vitesse de propagation du rayonnement optique, et
- S désignant la distance ou respectivement la valeur de mesure de distance absolue.

13. Système de convoyage (10) selon l'une des revendications 7 à 12 précédentes, **caractérisé en ce que** les deux ou plusieurs unités d'émission et de réception (101, 102) sont chacune configurées de manière à travailler aussi bien comme l'une que comme l'autre unité d'émission et de réception (101, 102) ou aussi bien comme première que comme deuxième unité d'émission et de réception (101, 102).

14. Système de convoyage (10) selon l'une des revendications précédentes, **caractérisé en ce que**

- le système de convoyage (10) forme un système de levage, un ascenseur ou une grue et/ou
- le dispositif déplaçable de transport (20) est ou forme un dispositif de transport (20) déplaçable linéairement, un chariot mobile d'un entrepôt, en particulier d'un entrepôt à étagères, un élément de levage d'un dispositif de levage, une cabine ou un élément déplaçable de levage d'un ascenseur.

15. Procédé de fonctionnement d'un système de convoyage (10), dans lequel

- la distance spatiale entre un système déplaçable de transport (20) du système de convoyage (10) et une autre partie (11), en particulier fixe, du dispositif de transport (10) est déterminée,
- au moins deux unités d'émission et de réception (101, 102) qui comportent chacune un émetteur (110), un récepteur (120) et une unité de commande (130) et dont l'une est fixée sur le dispositif déplaçable de transport (20) et l'autre sur une autre partie (11) du dispositif de convoyage (10), sont utilisées dans une relation de faisceau libre (40) optique et une transmission de paquets de données ayant lieu, **caractérisé en ce que**
- au moins une des, de préférence tous les deux des deux ou plusieurs, unités d'émission et de réception (101, 102) produit un signal d'horloge de réception (Ta(t)) à partir des signaux de réception optiques reçus via la relation de faisceau libre (40) optique, détecte les moments de changements de flanc montants et/ou descendants du signal d'horloge de réception (Ta(t)) sur une multiplicité de périodes d'horloge, estime, en faisant appel aux moments dans le passé, le moment du changement de flanc suivant respectif avec formation d'un moment de changement de flanc estimé et, à l'aide du moment de changement de flanc estimé et du moment de changement de flanc effectif, forme une valeur de variation de distance (dS) indiquant une variation de distance entre les unités d'émission et de réception (101, 102).

EP 3 165 943 B1

Fig. 1

Fig. 2

Pin(t)

NDR    NDP

t

Fig.3

Pin(t)

NDR    IP    NDR    I

t

Fig.4

Pin(t)

NDR    IP    NDP

t

Fig.5

Fig. 6

Ta(t)

T    T    T    T

Fig.7    t1    t2    t3    t4    t5'    t

Ta(t)

T-dT

dT

Fig.8    t1    t2    t3    t4    t5    t

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4435056 B4

- US 20130094927 A